# EUROPÄISCHE PATENTSCHRIFT

(11) **EP 1 771 363 B1**
(45) Veröffentlichungstag und Bekanntmachung des Hinweises auf die Patenterteilung: **03.06.2009**
(21) Anmeldenummer: 05756922.0
(22) Anmeldetag: 21.06.2005
(51) Int. Cl.: B65G 47/31, B65G 43/10

(54) **VERFAHREN UND VORRICHTUNG ZUR DYNAMISCHEN LÜCKENOPTIMIERUNG**
METHOD AND DEVICE FOR DYNAMIC GAP OPTIMISATION
PROCEDE ET DISPOSITIF D'OPTIMISATION DYNAMIQUE D'INTERVALLES

(30) Priorität: 23.07.2004 DE 102004035821
(43) Veröffentlichungstag der Anmeldung: 11.04.2007
(73) Patentinhaber: SIEMENS AKTIENGESELLSCHAFT, 80333 München (DE)
(72) Erfinder: KÖNIG, Frank, 45289 Essen (DE); WENTZEL, Martin, 44359 Dortmund (DE)
(86) Internationale Anmeldenummer: PCT/EP2005/052860
(87) Internationale Veröffentlichungsnummer: WO 2006/010677

(56) Entgegenhaltungen:
- WO-A-01/85582
- US-A1- 2002 000 361

## Beschreibung

Die Erfindung betrifft ein Verfahren und eine Vorrichtung zum dynamischen Optimierung der Lücken zwischen auf einem Förderer aufeinanderfolgend transportierten Objekten, insbesondere von Behältern zum Transport von Gepäckstücken in Gepäckförderanlagen von Flughäfen, gemäss dem Oberbegriff des Anspruchs 1 und dem Oberbegrift des Anspruchs 7.

In der Stückgutfördertechnlk kann das Fördergut auf zwei unterschiedliche weisen befördert werden. Es kann entweder direkt auf einem Förderer, in der Regel einem Gurtsystem transportiert werden oder es wird auf einem Träger, z.B. in einen genormten Behälter eines Behältersystem geladen, der dann auf einem Förderer transportiert wird.

Je nach Anwendung und Art des Fördergutes kann die eine oder andere Art der Beförderung Vorteile aufweisen. Die vorliegende Erfindung findet normalerweise in Behältersystemen Anwendung, kann aber auch, unter Berücksichtigung bestimmter Anforderungen an das Fördergut, auf Gurtsystemen Verwendung finden.

Ein typisches Beispiel für ein Behältersystemen sind Gepäckförderanlagen an Flughäfen. Dort wird das Gepäck in einen genormten Behälter geladen, der von der Größe her in der Lage ist, jegliche in Frage kommende Gepäckformen aufzunehmen, die normal am Counter aufgegeben werden können und nicht als Sperrgepäck gelten. Die zulässige Größe wird vom Flughafen festgelegt und bestimmt damit die Auslegung des Gepäckfördersystems maßgeblich.

Das Fördersystem selbst besteht aus einer komplexen Struktur von Förderlinien, die das Gepäck zu den verschiedenen zielen im System transportieren müssen. Im Hinblick auf die Wirtschaftlichkeit solcher Anlagen ist es notwendig, die verwendeten Förderer optimal zu nutzen. Dies bedeutet, dass eine möglichst hohe Auslastung der Förderer hinsichtlich der Anzahl der zu transportierenden Behältern gegeben sein muss. Allerdings muß aber systembedingt zwischen zwei Behältern ein Mindestabstand vorgesehen sein, der sich aus deren mechanischer Konstruktion ergibt und nicht veränderbar ist. So ist ein wichtiger Faktor für diesen Mindestabstand zum Beispiel die Verschränkung der Behälter während der Kurvenfahrt.

Soll eine Fördererlinie optimal genutzt werden, so ist es unerlässlich, dass der Abstand zwischen zwei Behältern dem erforderlichen Mindestabstand entspricht oder nur unwesentlich größer ist. Das ist besonders wichtig bei so genannten dynamischen Speichern, die aus einem geschlossenen Kreis von Förderern bestehen, der ständig in Bewegung ist und über Zu- und Abgänge die Ein- und Ausschleusung von Behältern in beliebiger Reihenfolge zulässt. Aus einem solchen Speicher lässt sich jeder Behälter mit einer maximalen Verzögerung ausschleusen, die der Zeit entspricht, die der Behälter benötigt um eine Runde im Speicher zu beenden.

Eine Einschleusung setzt aber eine Lücke zwischen zwei Behältern im Förderfluss des Speichers voraus, die groß genug ist, um den neuen Behälter unter Einhaltung der geforderten Mindestabstände einzuschleusen. Werden, wie in Behältersystemen üblich, die Behälter chaotisch eingeschleust, d.h. sobald sich eine geeignete Lücke anbietet, so wird der Abstand zwischen den Behältern, solange er nur größer ist, als die Mindestlänge des Behälters, beim Einschleusen nicht beachtet. Daraus ergibt sich bei sich erhöhendem Füllgrad eine ungleichmäßige Verteilung der Behälter und somit verschenkter Speicherplatz, der sich ergibt, wenn zwischen der Mindestlücke zum Einschleusen (Behälterlänge + 2 x Mindestabstand + Sicherheitstoleranz) und dem Mindestabstand zwischen zwei Behältern eine großer Unterschied besteht. Der Förderer wird nicht optimal ausgenutzt. Würden die Abstände zwischen den Behältern, die zwischen diesen Werten liegen umverteilt, so würden sich Lücken ergeben, die groß genug sind um zusätzliche Behälter einzuschleusen. Ein Verfahren und eine Vorrichtung zur dynamischen Optimierung der Lücken zwischen aufeinem Förderer aufeinanderfolgend transportierten Objekten der oben genannten Art sind aus der US 2002/000361 A1 bekannt. Aufgabe der vorliegenden Erfindung ist es, ein Verfahren und eine Vorrichtung zur Reduzierung und zur Vereinheitlichung der Abstände zwischen den auf einem Förderer aufeinanderfolgend transportierten Objekten, wie den Behältern eines Behältersystems, insbesondere einer Gepäckförderanlage in Flughäfen, zu schaffen, mit dem eine optimale Ausnutzung des Fördersystems erreichbar ist.

Zur Lösung der Aufgabe wird ein Verfahren vorgeschlagen,

Zur dynamischen Optimierung der Lücken zwischen auf einem Förderer aufeinanderfolgend transportierten Objekten gemäss Anspruch 1. Mehrere Sensoren messen erfindungsgemäß die Abstände zwischen zwei Objekten. Sobald dieser Abstand geringer ist als der Mindestabstand, der zur Einschleusung zusätzlicher Objekte notwendig wäre, so wird die Lücke zwischen den Objekten auf das Mindestabstandsmaß reduziert. Dadurch verringert sich der nicht mehr durch Objekte belegbare Freiraum im Förderersystem, gleichzeitig kann aber durch das Verdichten der Speicherkapazität an anderer Stelle des Systems Freiraum für weitere einzuschleusende Objekte geschaffen werden.

Nach einem anderen Merkmal der Erfindung ist zur vereinfachung des Verfahrens vorgesehen, dass der sensorisch erfaßte Abstand zwischen zwei zu fördernden Objekten von der Auswerteeinheit in Korrekturstufen abgebildet wird, denen jeweils ein bestimmter Korrekturwert zugeordnet ist. Die Abstände zwischen den vorbeifahrenden Objekten werden also in verschiedene Kategorien unterteilen, u.z. in solche, die eine unterschiedlich starke Korrektur erforderlich machen und andere, bei denen keine Korrekturen erforderlich sind.

So ist erfindungsgemäß bei bereits vorhandenem und gemessenem Mindestabstand zwischen den benachbarten Objekten der Korrekturwert 0, dass heißt, eine Korrektur ist dann nicht erforderlich, wenn die Objekte bereits optimal dicht aufeinander folgen.

Das gleiche gilt erfindungsgemäß, wenn der gemessene Abstand zwischen den benachbarten Objekten gleich oder größer der Länge eines Objektes plus dem Mindestabstand ist, auch dann ist der Korrekturwert 0, weil ein zusätzliches Objekt problemlos eingeschleust werden kann.

Ist der ermittelte Korrekturwert größer 0, soll also der Abstand zwischen zwei aufeinanderfolgenden Objekten verkleinert werden, so ist nach einem besonderen Merkmal der Erfindung vorgesehen, dass der das Objekt, in der Regel über den transportierende Förderer, beschleunigt wird, um es näher an das voraus transportierte Objekt anzuschließen.

Vorzugsweise wird das Verfahren nach der Erfindung, besonders im Bereich der Gepäckförderung an Flughäfen, autark zur normalen Prozesssteuerung eingesetzt, um die Präzision der Korrektur zu erhöhen.

Eine Vorrichtung, die zur Durchführung des erfindungsgemäßen Verfahrens verwendbar ist, ist gekennzeichnet durch einen kurzzeitig in seiner Geschwindigkeit veränderbaren Förderer, der zwischen einem Zu- und einem Abförderer angeordnet ist und der in Abhängigkeit von dem sensorisch erfaßten Abstand zwischen zwei benachbarten Objekten relativ zu dem Zu- und Abförderer verlangsambar oder beschleunigbar ist. Auf dem Förderer wird also eine Geschwindigkeit eingestellt, die relativ zu dem zu- und abfördernden Förderer höher oder niedriger ist. Die dadurch beschleunigbaren oder verzögerbaren Objekte schließen dann zum vorhergehenden Objekt, bzw. zum nachfolgenden Objekt auf, und zwar durch den durch den Geschwindigkeitsunterschied erzeugten Schlupf. Auf diese Weise werden die Lücken auf den Förderern minimiert und die Auslastung der Anlage wird gesteigert.

Vorzugsweise besteht eine Meßvorrichtung der Erfindung zur Erfassung des Abstandes zwischen zwei benachbarten Objekten, aus mehreren in definierten Abständen in den Förderer integrierten, von den durchlaufenden Objekten aktivierten Sensoren, die beim Durchgang zweier aufeinanderfolgende Objekte entsprechend ihrer Abstände Korrekturstufen definieren, in denen die Größe der Geschwindigkeitsänderung des in seiner Geschwindigkeit veränderbaren Förderers beeinflußbar ist.

Vorzugsweise enthält die Vorrichtung eine Auswerteeinheit zur Ermittlung der Abstände der benachbarten Objekte aus den von den Sensoren erhaltenen Signalen und zum Festlegen einer Korrekturstufe, mit deren Signal der Antrieb des Förderers ansteuerbar ist. Je nach der ermittelten Korrekturstufe wird der Förderer stärker oder weniger stark beschleunigt, so dass das jeweils gewünschte Nacheilen des nachfolgenden Objektes und Aufschließen auf das voreilende Objekt hinreichend genau steuerbar ist.

Wichtig ist dabei, dass nach einem anderen Merkmal der Erfindung der in seiner Geschwindigkeit veränderbare Förderer zur Aufnahme nur eines der zu transportierenden Objekte dimensioniert ist, um eine individuelle Korrektur zu gewährleisten.

Vorzugsweise ist der Förderer mit einer Oberfläche versehen, die eine hohe Friktion mit dem Objekt ermöglicht und die Oberfläche des nachfolgenden Abförderers weist eine demgegenüber geringere Friktion auf. Die hohe Friktion erlaubt eine spontane und schnelle Beschleunigung. Hingegen muss der darauf folgende Förderer mit niedrigerer Friktion arbeiten, um eine sinnvolle Korrektur zu ermöglichen. Durch den Schlupf, den das Objekt durch den Geschwindigkeitsunterschied zwischen dem Förderer und dem folgenden Förderer erhält wird der Abstand zum vorhergehenden Objekt geändert und im Idealfall auf den Mindestabstand reduziert.

Bei der Anwendung der Erfindung im Gepäckfördersystem eines Flughafens sind vorzugsweise die Förderer des erfindungsgemäßen Förderersystems als Gurtförderer mit zwei voneinander beabstandeten Fördergurten ausgebildet, auf denen die Objekte aufliegen.

Die Erfindung schafft ein Verfahren und eine Vorrichtung zur dynamischen Lückenoptimierung, mit dem bzw. mit der die eingangs beschrieben Lücken in einem Förderersystem der gattungsgemäßen Art auf einfache Weise minimiert werden können und dadurch die Auslastung der Anlage gesteigert werden kann.

In Folgenden wird die Funktionsweise der Erfindung anhand des Einsatzes in der Gepäckförderanlage eines Flughafens beispielhaft beschrieben. Es zeigt:
- Figur 1: in schematischer Darstellung einen Ausschnitt aus dem Behälterfördersystem der Erfindung und
- Figur 2: das Steuerungsschema der erfindungsgemäßen Vorrichtung.

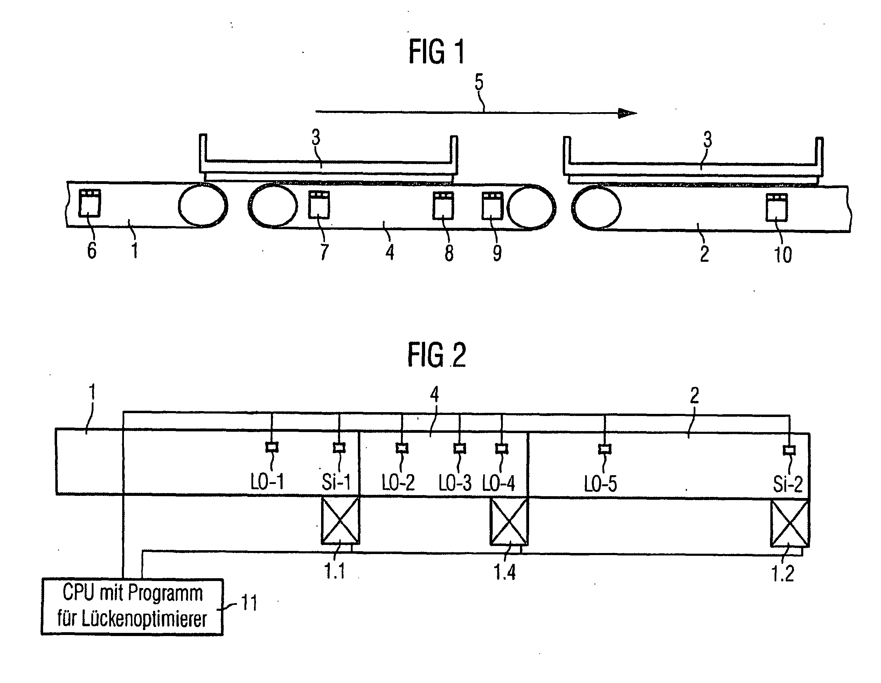

In Figur 1 ist ein Ausschnitt der Gepäckförderanlage eines Flughafens grob schematisch dargestellt. Erkennbar ist das Ende des mit 1 bezeichneten Zuförderers und der Anfang des mit 2 bezeichneten Abförderers für die mit 3 bezeichneten Gepäckbehälter. Zwischen dem Zuförderer 1 und dem Abförderer 2 ist ein weiterer kurzer geschwindigkeitsregulierbarer Förderer vorgesehen, der mit 4 bezeichnet ist. Die Gepäckbehälter 3 liegen auf dem jeweiligen Obertrum der Förderer 1, 2 und 4 auf, die als Gurtförderer ausgebildet sind. Die Transportrichtung der Förderer 1, 2 und 4 ist bei 5 durch einen Pfeil angegeben. In Figur 1 sind weiterhin schematisch die Sensoren 6 bis 10 eingezeichnet, die innerhalb des Zu- und Abförderers 1, 2 und des geschwindigkeitsregelbaren Förderers 4 angeordnet sind und beim Durchlauf der Behälter 3 aktiviert werden. Die Sensoren 6 bis 10 sind so angeordnet, dass sie die Abstände zwischen den vorbeifahrenden Objekten so erfassen, dass sie in verschiedene Kategorien unterteilen werden können, wie anhand des Steuerungsschemas in Figur 2 erläutert wird.

Figur 2 zeigt das Steuerungsschema der erfindungsgemäßen Vorrichtung, wobei der Zuförderer 1 und der Abförderer 2 sowie der dazwischen angeordnete geschwindigkeitsregelbare Förderer 4 mit ihren Antrieben 1.1, 1.4 und 1.2 vereinfacht dargestellt sind. Die Sensoren 6 bis 10 aus Figur 1 sind hier mit LO-1 bis LO-5 bezeichnet und ihrem jeweiligen Befestigungsort entsprechend dargestellt.

Beim Durchlauf der Behälter 3 in Pfeilrichtung 5 (Figur 1) wird der Abstand der beiden benachbarten Behälter 3 über die jeweils aktivierten Sensoren L0-1 bis L0-5 erfasst. Der Abstand zwischen den Sensoren L0-1 und L0-5 entspricht der erforderlichen Mindestlücke. Sind die Sensoren L0-4 und L0-5 von den Objekten 3 abgedeckt, so ist darauf zu schließen, dass bereits ein Mindestabstand zwischen den Objekten 3 vorhanden ist und somit keine Korrektur des Abstandes erforderlich ist. Wird der Sensor L0-3 abgedeckt, nicht jedoch der Sensor L0-4 so ist ein Abstand zwischen den Objekten 3 vorhanden, der größer ist als der festgelegte Mindestabstand. Die Auswerteinheit 11 ermittelt in Kenntnis der Abstände der Sensoren aus dem erhaltenen Signal die Korrekturstufe 1, der ein bestimmtes Signal zur Beschleunigung des Förderers 4 entspricht. Der auf dem Förderer 4 aufliegende Behälter wird über den Motor 1.4 zum Antrieb des Förderers in Pfeilrichtung 5 (Fig.1) beschleunigt und an den voraustransportierten Behälter 3 angenähert, bis der festgelegte Mindestabstand erreicht ist.

Wird durch die nicht abgedeckten Sensoren L0-3 und L0-4 festgestellt, dass der Abstand zwischen den Behältern 3 entsprechend den Abständen der Sensoren größer ist, so wird die Korrekturstufe 2 ermittelt, wodurch das in der Auswerteeinheit 11 errechnete Signal zur Beschleunigung des Förderers 4 entsprechend anders ausfällt und der auf dem Förderer 4 aufliegende Behälter 3 mit noch höherer Beschleunigung und größerer Geschwindigkeit in Richtung des voraustransportierten Behälters 3, d.h. in Pfeilrichtung 5 transportiert wird. Entsprechend der Anzahl der angeordneten Sensoren und deren Abstände voneinander lassen sich mehrere Korrekturstufen steuern, denen jeweils ein bestimmtes Signal für den Antriebsmotor 1.4 des Förderers 4 zugeordnet ist, der den Förderer 4 beschleunigt. Ermitteln die Sensoren einen Abstand zwischen den Objekten 3 der größer ist als die Länge des Mindestabstand eines Behälters, so erfolgt keine Korrektur der Geschwindigkeit des Förderers 4, weil dann ein ausreichender Raum zum Einschleusen eines zusätzlichen Behälters 3 vorhanden ist.

## Patentansprüche

1. Verfahren zur dynamischen Optimierung der Lücken zwischen auf einem Förderer aufeinanderfolgend transportierten Objekten (3), insbesondere von Behältern zum Transport von Gepäckstücken in Gepäckförderanlagen von Flughäfen, bei dem der Abstand zwischen zwei benachbarten zu fördernden Objekten (3) sensorisch erfasst und als Messwert einer Auswerteeinheit (11) zur Ermittlung eines Korrekturwertes zugeführt wird, aus dem, sobald der erfasste Abstand geringer als ein zur Einschleusung eines zusätzlichen Objektes notwendiger Mindestabstand ist, ein Signal zur vorübergehenden Veränderung der Geschwindigkeit eines zwischen einem Zuförderer und einem Abförderer (1,2) angeordneten Förderers (4) gebildet wird, der zur Aufnahme nur eines der zu transportierenden Objekte (3) dimensioniert ist.

2. Verfahren nach Anspruch 1,
**dadurch gekennzeichnet,**
**dass** der sensorisch erfasste Abstand zwischen zwei zu fördernden Objekten (3) von der Auswerteeinheit in Korrekturstufen abgebildet wird, denen jeweils ein bestimmter Korrekturwert zugeordnet ist.

3. Verfahren nach Anspruch 1 oder 2,
**dadurch gekennzeichnet,**
**dass** bei bereits vorhandenem gemessenen Mindestabstand zwischen den benachbarten Objekten der Korrekturwert 0 ist.

4. Verfahren nach einem der Ansprüche 1 bis 3,
**dadurch gekennzeichnet,**
**dass** bei einem gemessenen Abstand zwischen den benachbarten Objekten der gleich oder größer der Länge eines Objektes plus dem Mindestabstand ist, der Korrekturwert 0 ist.

5. Verfahren nach einem der Ansprüche 1 bis 4,
**dadurch gekennzeichnet,**
**dass** der das Objekt transportierende Förderer bei einem ermittelten Korrekturwert größer 0 beschleunigt wird.

6. Verfahren nach einem oder mehreren der vorhergehenden Ansprüche,
**dadurch gekennzeichnet,**
**dass** das Verfahren autark zur normalen Prozesssteuerung eingesetzt wird.

7. Vorrichtung zur Ausführung des Verfahrens nach Ansprüchen 1 bis 6
in Gepäckförderanlagen von Flughäfen mit Behältern zum Transport der Gepäckstücken,
**gekennzeichnet durch**
einen kurzzeitig in seiner Geschwindigkeit veränderbaren Förderer (4), der zwischen einem Zu- (1) und einem Abförderer (2) angeordnet ist und der in Abhängigkeit von dem sensorisch erfassten Abstand zwischen zwei Behältern (3) relativ zu dem Zu- und Abförderer verlangsambar oder beschleunigbar ist, wobei der in seiner Geschwindigkeit veränderbaren Förderer (4) zur Aufnahme nur eines der zu transportierenden Behälters (3) dimensioniert ist.

8. Vorrichtung nach Anspruch 7,
**gekennzeichnet durch**
eine Messvorrichtung zur Erfassung des Abstandes zwischen zwei benachbarten Behältern (3), bestehend aus mehreren in definierten Abständen in den Förderer integrierten, von den durchlaufenden Behältern aktivierten Sensoren (6 - 10), die beim Durchgang zweier aufeinanderfolgende Behälter (3) entsprechend ihrer Abstände Korrekturstufen definieren, in denen die Größe der Geschwindigkeitsänderung des in seiner Geschwindigkeit veränderbaren Förderers (4) beeinflussbar ist.

9. Vorrichtung nach Anspruch 7 und 8,
**gekennzeichnet durch**
eine Auswerteeinheit (11) zur Ermittlung der Abstände der benachbarten Behälter (3) aus den von den Sensoren (1 - 6) erhaltenen Signalen und zum Festlegen einer Korrekturstufe mit deren Signal der Antrieb des Förderers (4) ansteuerbar ist.

10. Vorrichtung nach Anspruch 7,
**dadurch gekennzeichnet,**
**dass** der Förderer (4) mit einer Oberfläche versehen ist, die eine hohe Friktion mit dem Behälter (3) ermöglicht und dass die Oberfläche des nachfolgenden Abförderers (2) eine demgegenüber geringere Friktion aufweist.

11. Vorrichtung nach Anspruch 7,
**dadurch gekennzeichnet,**
**dass** die Förderer (1,2 und 4)des Förderersystems als Gurtförderer mit zwei voneinander beabstandeten Fördergurten ausgebildet sind, auf denen die Behälter aufliegen.

## Claims

1. Method for dynamic optimization of the gaps between objects (3) which are being transported successively on a conveyor, in particular of containers for transportation of items of baggage in baggage conveyor installations at airports, in which the distance between adjacent objects (3) to be conveyed is detected by sensors and is supplied as a measured value to an evaluation unit (11) for determination of a correction value, from which, as soon as the detected distance is less than a required minimum separation to feed in additional objects, a signal is formed in order to temporarily vary the speed of a conveyor (4) arranged between an input conveyor and an output conveyor (1, 2), the conveyor being designed to hold only one of the objects (3) to be transported.

2. Method according to Claim 1,
**characterized**
**in that** the distance detected by sensors between two objects (3) to be conveyed is mapped by the evaluation unit onto correction steps, each of which has a specific associated correction value.

3. Method according to Claim 1 or 2,
**characterized**
**in that** when the minimum separation between the adjacent objects has already been measured, the correction value is 0.

4. Method according to one of Claims 1 to 3,
**characterized**
**in that,** if the measured distance between the adjacent objects is equal to or greater than the length of an object plus the minimum separation, the correction value is 0.

5. Method according to one of Claims 1 to 4,
**characterized**
**in that** the conveyor which is transporting the object is accelerated if the determined correction value is greater than 0.

6. Method according to one or more of the preceding claims,
**characterized**
**in that** the method is used autonomously for normal process control.

7. Apparatus for carrying out the method according to Claims 1 to 6
in baggage conveyor installations at airports with containers for transportation of the items of baggage,
**characterized by**
a conveyor (4) whose speed can be varied briefly and which is arranged between an input conveyor (1) and an output conveyor (2), and which can be slowed down or accelerated as a function of the distance, detected by sensors, between two containers (3) relative to the input conveyor and output conveyor, the variable-speed conveyor (4) being designed to accommodate only one of the containers (3) to be transported.

8. Apparatus according to Claim 7,
**characterized by**
a measurement apparatus for detection of the distance between two adjacent containers (3), comprising a plurality of sensors (6 - 10), which are arranged at defined intervals in the conveyor, and activated by the objects passing through and, when two successive containers (3) pass through, define correction steps as a function of their separations, in which the magnitude of the speed change of the variable-speed conveyor (4) can be influenced.

9. Apparatus according to Claims 7 and 8,
**characterized by**
an evaluation unit (11) for determination of the distances between the adjacent containers (3) from the signals which are produced by the sensors (1 - 6), and for definition of a correction step whose signal can be used to control the drive for the conveyor (4).

10. Apparatus according to Claim 7,
**characterized**
**in that** the conveyor (4) is provided with a surface which allows high friction with the container (3), and in that the surface of the subsequent output conveyor (2) has less friction than this.

11. Apparatus according to Claim 7,
**characterized**
**in that** the conveyors (1, 2 and 4) in the conveyor system are in the form of belt conveyors with two conveyor belts which are separated from one another and on which the containers lie.

## Revendications

1. Procédé d'optimisation dynamique des intervalles entre des objets ( 3 ) transportés successivement sur un convoyeur, notamment de récipients de transport de bagages dans des installations de transport des bagages d'aéroport, dans lequel on détecte sensoriellement la distance entre deux objets ( 3 ) voisins à transporter et on l'envoie comme valeur de mesure à une unité ( 11 ) d'exploitation pour la détermination d'une valeur de correction, à partir de laquelle, dès que la distance détectée est plus petite qu'une distance minimum nécessaire pour l'inclusion d'un objet supplémentaire, on forme un signal pour modifier temporairement la vitesse d'un convoyeur ( 4 ) disposé entre un convoyeur ( 1 ) d'entrée et un convoyeur ( 2 ) de sortie, convoyeur ( 4 ) qui est dimensionné pour la réception de seulement l'un des objets ( 3 ) à transporter.

2. Procédé suivant la revendication 1, **caractérisé en ce que** l'on reproduit la distance détectée sensoriellement entre deux objets ( 3 ) à transporter par l'unité d'exploitation en paliers de correction, auxquels est associée respectivement une valeur de correction déterminée.

3. Procédé suivant la revendication 1 ou 2, **caractérisé en ce que,** pour la distance minimum mesurée déjà présente entre les objets voisins, la valeur de correction est de 0.

4. Procédé suivant l'une des revendications 1 à 3, **caractérisé en ce que,** pour une distance minimum mesurée entre les objets voisins qui est supérieure ou égale à la longueur d'un objet plus la distance minimum, la valeur de correction est 0.

5. Procédé suivant l'une des revendications 1 à 4, **caractérisé en ce que** l'on accélère le convoyeur transportant l'objet pour une valeur de correction déterminée supérieure à 0.

6. Procédé suivant l'une ou plusieurs des revendications précédentes, **caractérisé en ce que** l'on utilise le procédé d'une manière autonome par rapport à la commande normale de processus.

7. Dispositif pour la mise en oeuvre du procédé suivant les revendications 1 à 6
dans des installations de transport de bagages d'aéroport ayant des récipients de transport des bagages,
**caractérisé par**
un convoyeur ( 4 ), dont la vitesse peut être modifiée à bref délai, qui est disposé entre un convoyeur ( 1 ) d'entrée et un convoyeur ( 2 ) de sortie et qui peut être ralenti ou accéléré par rapport aux convoyeurs d'entrée et de sortie en fonction de la distance détectée sensoriellement entre deux récipients ( 3 ), dans lequel la vitesse du convoyeur ( 4 ), dimensionné pour la réception de seulement l'un des récipients ( 3 ) à transporter, peut être modifiée.

8. Dispositif suivant la revendication 7,
**caractérisé par**
un dispositif de mesure, pour la détection de la distance entre deux récipients ( 3 ) voisins, constitué de plusieurs capteurs ( 6 à 10 ) intégrés aux convoyeurs à des distances définies, activés par les convoyeurs qui passent et définissant, lors du passage de deux convoyeurs ( 3 ) qui se succèdent en fonction de la distance, des paliers de correction, dans lesquels la valeur de la variation de la vitesse du convoyeur ( 4 ), dont la vitesse peut être modifiée, peut être influencée.

9. Dispositif suivant les revendications 7 et 8,
**caractérisé par**
une unité ( 11 ) d'exploitation pour la détermination des distances entre les récipients ( 3 ) voisins à partir des signaux obtenus par les capteurs ( 1 à 6 ) et pour fixer un palier de correction par le signal duquel l'entraînement du convoyeur ( 4 ) peut être commandé.

10. Dispositif suivant la revendication 7,
**caractérisé**
**en ce que** le convoyeur ( 4 ) est pourvu d'une surface qui permet d'avoir un grand frottement avec le récipient ( 3 ) et en ce que la surface du convoyeur ( 2 ) de sortie venant ensuite a un frottement plus petit en comparaison.

11. Dispositif suivant la revendication 7,
**caractérisé**
**en ce que** les convoyeurs ( 1, 2 et 4 ) du système de convoyeur sont constitués sous la forme de convoyeurs à courroie ayant deux courroies de convoyeur à distance l'une de l'autre, sur lesquelles s'appliquent les récipients.
